(19) Europäisches Patentamt
European Patent Office
Office européen des brevets

(11) **EP 1 585 231 B1**

(12) **EUROPEAN PATENT SPECIFICATION**

(45) Date of publication and mention
of the grant of the patent:
**07.10.2009 Bulletin 2009/41**

(21) Application number: **03782075.0**

(22) Date of filing: **25.12.2003**

(51) Int Cl.:
**H04B 7/00** (2006.01)

(86) International application number:
**PCT/CN2003/001118**

(87) International publication number:
**WO 2004/059868 (15.07.2004 Gazette 2004/29)**

(54) **A METHOD FOR CALIBRATING SMART ANTENNA ARRAY SYSTEMS IN REAL TIME**

VERFAHREN ZUR KALIBRIERUNG INTELLIGENTER ANTENNENGRUPPENSYSTEME IN ECHTZEIT

PROCEDE D'ETALONNAGE DE SYSTEMES DE RESEAUX D'ANTENNES INTELLIGENTS EN TEMPS REEL

(84) Designated Contracting States:
**AT BE BG CH CY CZ DE DK EE ES FI FR GB GR HU IE IT LI LU MC NL PT RO SE SI SK TR**

(30) Priority: **25.12.2002 CN 02158623**

(43) Date of publication of application:
**12.10.2005 Bulletin 2005/41**

(73) Proprietor: **Da Tang Mobile Communications Equipment Co., Ltd.**
**Beijing 100083 (CN)**

(72) Inventors:
• **TAN, Zhe**
**Beijing 100083 (CN)**
• **LI, Feng**
**Beijing 100083 (CN)**

(74) Representative: **Mounteney, Simon James**
**Marks & Clerk LLP**
**90 Long Acre**
**London**
**WC2E 9RA (GB)**

(56) References cited:
| | |
|---|---|
| EP-A- 1 548 957 | EP-A1- 1 204 161 |
| EP-A2- 0 805 510 | EP-A2- 1 085 684 |
| WO-A-01/19101 | CN-A- 1 283 901 |
| CN-C- 1 078 390 | US-A- 5 546 090 |

## Description

### Field of the Technology

The present invention generally relates to a smart antenna technology of the wireless communication system, more specifically, to a method for calibrating a smart antenna array system in real time.

### Background of the Invention

In modem wireless communication systems, especially in a Code Division Multiple Access (CDMA) wireless communication system, smart antenna has been one of the most attractive technologies. By means of smart antenna array and the technology based on digital signal processing, wireless base stations can achieve self-adaptive beam forming of both transmitting and receiving signals, therefore greatly reduce the system interference, increase the system capacity, decrease the transmitting power and improve the receiving sensitivity.

In the Chinese patent for invention titled "A Time-Division Duplex Synchronous Code Division Multiple Access Wireless Communication System with Smart Antenna" (CN 97 104039.7), the structure of a wireless communication system base station with smart antenna is disclosed. The base station comprises an antenna array with one or more than one antenna elements, radio frequency (RF) cables and RF transceivers correspondingly connected. Based on the signals received from the user terminal in each antenna element of the antenna array, a baseband signal processor can obtain the space vector characteristics and direction of arrival (DOA) of the uplink signals, from which the weights of every link obtained are employed for downlink transmitting beam forming. In this way, all the functionality of a smart antenna is achieved under the circumstances of symmetrical radio wave propagation characterized as the result of time-division duplex communication.

In order to transmit and receive signals accurately with the smart antenna, it must be guaranteed that every antenna element, RF cable and transceiver, which the smart antenna array comprises, operate without difference, i.e. every transmitting and receiving link should have the same amplitude and phase response. The procedure and method for amplitude and phase compensation of each transmitting and receiving link are the smart antenna calibration relating to the present invention.

As the characteristics of electronic elements, especially active elements, differ from each other, the sensitivities thereof to operation frequency and ambient temperature are different, and the changes in the characteristics of every transmitting and receiving link due to the reasons above are different, the smart antenna calibration should be carried out periodically while the base station is in operation.

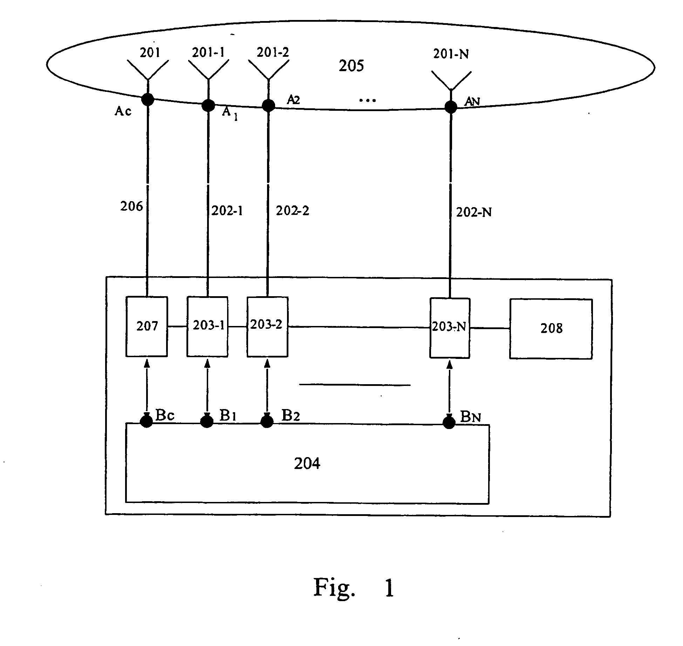

In the published document of the Chinese patent titled "A method and apparatus for calibrating a smart antenna array" (CN 99 111350.0) (See Figure 1), a calibrating link is set by an antenna element 201, a couple structure 205, a RF cable 206 and a pilot transceiver 207 sequentially connected. The couple structure 205 sets up a RF couple connection with all the antenna elements 201-1, 201-2 ... 201-N of the smart antenna, and allocates the RF signals to all antenna elements constituting the array according to need. The pilot transceiver 207 has the same structure as the other transceivers 203-1, 203-2...203-N of the base station and uses a common local oscillator 208. The pilot transceiver 207 works coherently with other transceivers and connects with the baseband signal processor 204 via a digital bus. Each antenna element connects to a RF cable and further to a transceiver, and the connected antenna element, RF cable and transceiver form a transmitting link or a receiving link. Ac, $A_1$, $A_2$,...$A_N$ in Fig. 1 represent the connection points between the antenna elements and the RF cables 201-1, 201-2 ... 201-N, respectively; $B_C$, $B_1$, $B_2$...$B_N$ represent the connection points of the pilot transceiver 207 and the radio transceivers 203-1, 203-2...203-N with the baseband signal processor 204, respectively.

When making calibration, calibrate the calibration link first by using a network vector analyzer and record the receiving and transmitting transmission coefficients of the calibration link respectively, then perform the receiving calibration and transmitting calibration respectively. In the receiving calibration, the pilot transceiver transmits a signal at a given working frequency, and all the other links in the base station are set in the receiving state. Measure the outputs of all the receiving links and compute the ratio of the receiving transmission-coefficient (vector) of each link to the transmission-coefficient (vector) of a reference link. When the ratio of the amplitudes of the transmission-coefficients equals to 1, record the phase difference of each receiving link from the reference link. In the transmitting calibration, set one link after another of the base station in the transmitting state with all the other links close at the same time and the pilot transceiver will receive the signal of each transmitting link at a given working frequency, respectively; compute the ratio of the transmission-coefficient (vector) of each link during transmission to the transmission-coefficient (vector) of the reference link, and when the ratio of the amplitudes of the transmission-coefficients equals to 1, record the phase difference of every receiving link from the reference link.

The patent mentioned above (of which EP 1 204 161 is a family member) only relates to the general scheme of the method and apparatus for real-time calibration without a specific engineering implementation thereof, including the calibration sequence used in the transmitting and receiving calibration and the computation by the baseband signal processor, and how to perform the real-time calibration when the smart antenna is in operation. In addition, the transmitting calibration as described above is carried out with one link in the transmitting state at a time while all other links are in the receiving state, which is unfavorable for fast real-time calibration.

EP 0 805 510 discloses a method of self calibration of an active array system, a module under test being phase-modulated using a special command to increment the phase from pulse to pulse.

## Summary of the Invention

It is the object of the present invention to provide a real-time calibration method for a smart antenna array so as to periodically calibrate the smart antenna array when a base station is in operation and compute the compensation coefficients for the transmitting and the receiving links of the smart antenna array to be calibrated.

The technical solution to achieve the above object is as follows: pre-calibrating each antenna element of a smart antenna array (201-1 to 201-N) to obtain the transmitting compensation coefficient $c_k^{TX}$ and the receiving compensation coefficient $C_k^{RX}$ of each antenna element (201-1 to 201-N) relative to a calibration antenna element (201), **characterized in that:**

in a transmitting calibration procedure, a plurality of transmitting links transmit each calibration signal simultaneously, and a calibration link receives a combined signal thereof, a baseband signal processor (204) processes the combined signal received by the calibration link to obtain the amplitude and phase response of each transmitting link and computes the compensation coefficient of each transmitting link on the basis of the amplitude and phase response of each transmitting link and the transmitting compensation coefficients $c_k^{TX}$ obtained in the pre-calibration for compensating all the downlink data of the base station;

in the receiving calibration procedure, the calibration link transmits a calibration signal, and the receiving links receive the calibration signal simultaneously, then the baseband signal processor (204) processes the calibration signals received by the receiving links to obtain the amplitude and phase response of each receiving link then computes the compensation coefficient of each receiving link on the basis of the amplitude and phase response of each receiving link and the receiving compensation coefficients $C_k^{RX}$ obtained in the pre-calibration for compensating all the uplink data of the base station;

the calibration signal for each antenna element is generated by a periodic cycling shift of a basic calibration sequence and the calibration signal is a calibration sequence with good anti-white-noise characteristics.

The pre-calibrating is carried out after the production of the smart antenna array. The transmitting and receiving compensation coefficients obtained will be stored. After the smart antenna array is installed on the site of the base station, the stored pre-calibration transmitting and receiving compensation coefficients obtained in the pre-calibrating are inputted into the baseband signal processor of the base station.

Generating a calibration signal by a periodic cycling shift of a basic calibration sequence includes: taking a binary sequence $m_p$ as the basic calibration sequence with a length P; performing a phase equalization to the sequence $m_p$ to generate $\underline{m}_p$, a complex vector for the calibration sequence; expanding the $\underline{m}_p$ periodically to obtain a new periodical complex vector; obtaining a calibration vector for each antenna element from the $\underline{m}$; generating a calibration signal for each antenna element from the calibration vector for each antenna element.

The length of said basic calibration sequence is W×N and the length of said calibration sequence is W×N+W-1, where N is the number of antenna elements in the antenna array, and W is the window length in channel estimation for each transmitting or receiving link.

Said transmitting calibration and receiving calibration are periodically performed in the idle gap of the mobile communication system.

In a TD-SCDMA system, said transmitting calibration and receiving calibration are performed in the protective gap (GP) between the uplink pilot time-slot and the downlink pilot time-slot in a frame.

Said computing the compensation coefficient of each transmitting link in the transmitting calibration comprises: first, obtaining the channel impulse response of each transmitting link; second, computing the amplitude and phase response of the path between each transmitting link, including the transceiver, and the calibration link antenna element; third, multiplying the amplitude and phase response with the transmitting compensation coefficient of the corresponding link obtained in pre-calibrating, and then obtaining the transmitting compensation coefficient of each link.

Said computing the compensation coefficient of each receiving link in the receiving calibration comprises: first, obtaining the channel impulse response of each receiving link; second, computing the amplitude and phase response of the path between each receiving link, including the calibration link antenna element, and the transceiver; third, multiplying the amplitude and phase response with the receiving compensation coefficient of the corresponding link obtained in the pre-calibrating, and then obtain the receiving compensation coefficient of each link.

The real-time calibration method of this invention, for which it is necessary to set a calibration link specially for realizing the calibration function (as described in the background of the invention) which consists of an antenna element, a feeder cable and a pilot transceiver: before the delivery of the antenna array, first pre-calibrating the antenna array to obtain compensation coefficients of each antenna element relative to a calibration antenna element; then storing the compensation coefficients in the network operation and maintenance equipment; after the on-site installation of the smart antenna array, loading the compensation coefficient into the base station.

Said calibration performed periodically while the base station is in operation further comprises: in the transmitting calibration, the transmitting links simultaneously transmitting a fixed level calibration sequence, which is received by the calibration link as a combined signal thereof; in the receiving calibration, the calibration link transmitting a fixed level calibration sequence, which is received simultaneously by the receiving links.

By computing the received signals according to the computation method provided by this invention, the compensation coefficients of the transmitting and receiving links of the smart antenna array can be obtained so that the real-time calibration can be accomplished.

The fixed level calibration sequence employed is generated by a periodic cycling shift to a basic calibration sequence.

The method of the present invention has the advantages of short computation time and simple controls. It is especially suitable for a smart antenna array in the third generation mobile communication system with high chip rate.

Although the above solution is proposed mainly for CDMA wireless communication systems, the method of the present invention is fully applicable, after simple modification, to frequency division multiple access and time division multiple access wireless communication systems. It can not only be used to calibrate a smart antenna operating in TDD mode, but also a smart antenna operating in FDD mode.

By calibrating a smart antenna array with the method of the present invention, beams of the smart antenna array are greatly improved and the transmitting powers are decreased, resulting in a good implementation of the smart antenna technology.

### Brief Description of the Drawings

   Figure 1 is a schematic diagram for the configuration of a base station with a smart antenna array comprising a calibration link.
   Figure 2 is a schematic diagram for the layout of pre-calibrating of a smart antenna array.

### Detailed Description of the Invention

The method of the present invention is proposed on the basis of an antenna array which is a passive microwave (radio frequency) network. Characteristics of mutual coupling between each antenna element of this antenna array and the calibration antenna element remain unchanged at a given working frequency provided that the design of the antenna array product has been finalized and the structure thereof is fixed. Therefore, before delivery of the antenna array, each antenna element of the antenna array can be tested relative to the calibration antenna element at a given working frequency or can be pre-calibrated to obtain the compensation coefficient of each antenna element relative to the calibration antenna element which is then stored in the network management database as the pre-calibration data. After the antenna array has been installed on site, the antenna array pre-calibration data are loaded to the base station by the network operation and maintenance equipment, such as OMC_R or LMT. In this way, the antenna array can be calibrated with the real-time calibration method according to the present invention when the antenna array starts into operation.

The method of the invention can be employed in a typical time-division duplex (TDD) CDMA base station equipped with a smart antenna. The configuration of the base station is shown in Fig. 1. The base station comprises N identical antenna elements 201-1, 201-2 ... 201-N; N identical feeder cables 202-1, 202-2 ... 202-N; N RF transceivers 203-1, 203-2 ... 203-N that work coherently; and an appropriate baseband signal processor 204. In order to implement the calibration, a calibration (reference) link is also established, which consists of a RF coupling structure 205, a calibration antenna element 201, a feeder cable 206 and a pilot transceiver 207, wherein the pilot transceiver 207 works coherently with N transceivers 203-1, 203-2 ... 203-N, and uses a common local oscillator 208. N transceivers 203-1, 203-2 ... 203-N and the pilot transceiver 207 connect with the baseband signal processor 204 via a data bus.

The real-time calibration method of the present invention comprises the following key steps:

The First step: before delivery of the smart antenna array, pre-calibrating each antenna element using a radio frequency (microwave) network vector analyzer to obtain the compensation coefficient for each antenna element relative to the calibration antenna element.

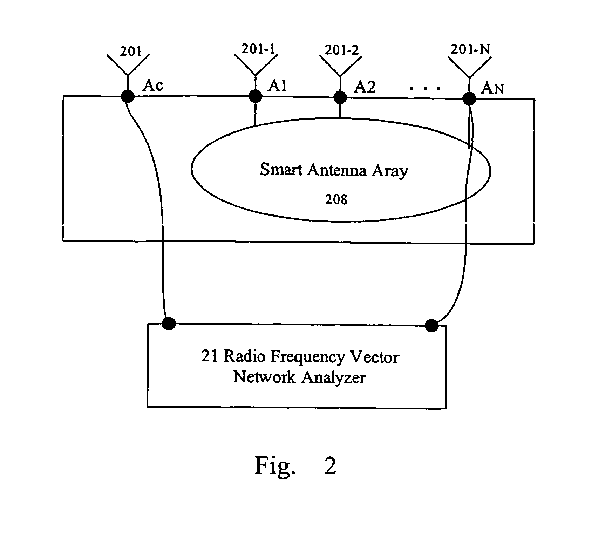

Refer to Fig. 2, in pre-calibration, with one end of the radio frequency network vector analyzer 21 connected to the antenna element of the calibration link 201 through the point Ac and the other end connected to the antenna elements 201-1, 201-2 ... 201-N of the smart antenna array 208 in proper order through the points $A_1$, $A_2$...$A_N$, the radio frequency network vector analyzer 21 performs the transmitting and receiving pre-calibration respectively.

If the structure of the smart antenna is rather firm by design, it can be recognized that the channel characteristics between each antenna element 201-1, 201-2 ... 201-N and the calibration antenna unit 201 remain unchanged on the whole with the environmental conditions at a fixed working frequency, given that there is no disruption of the relative location. So it is possible to perform the pre-calibration measurement using a radio frequency network vector analyzer.

In the transmitting pre-calibration, a fixed level digital signal is transmitted by each antenna element of 201-1, 201-2 ... 201-N, respectively, and the signal is received by the antenna element of the calibration link 201; the radio frequency network vector analyzer 21 measures and computes the transmitting compensation coefficient $c_i^{TX}$ (TX represents transmitting) between $A_i$ ( i=1 , ...N ) and $A_c$, thus the transmitting compensation coefficient $c_i^{TX}$ between each antenna element of 201-1, 201-2 ... 201-N and the calibration antenna element 201 is obtained. In the receiving pre-calibration, the antenna element of the calibration link 201 transmits a fixed level digital signal, which is received by each antenna element 201-1, 201-2 ... 201-N; the radio frequency network vector analyzer 21 measures and computes the receiving compensation coefficient $c_i^{RX}$ (RX represents receiving) between $A_c$ and $A_i$ (i=1 , ...N), thus the receiving compensation coefficient $c_i^{RX}$ between the calibration antenna element 201 and each antenna element 201-1, 201-2 ... 201-N is obtained.

In general, in a base station of TDD CDMA system, since each transceiver is connected to the same antenna element (i.e. the transmitting and receiving links have a common antenna element), the measured transmitting compensation coefficient of each antenna element equals to the receiving compensation coefficient thereof, i.e. $c_i^{TX} =$

$c_i^{RX}$ .

In an FDD CDMA system, however, when the smart antenna technology is employed, different antenna arrays are usually used for transmitting and receiving, respectively, in order to isolate the transmitting link from the receiving link. Therefore, each antenna element of the two antenna arrays should be measured and pre-calibrated respectively.

The second step: inputting the above pre-calibration result (the transmitting compensation coefficient and the receiving compensation coefficient) in the network operation and maintenance equipment. After the antenna array has been installed on site, the antenna array compensation coefficients are loaded to the baseband signal processor of the base station to which the antenna array is connected by the network operation and maintenance equipment, such as OMC_R or LMT.

The third step is carried out while the base station starts operation or is in operation. This step comprises: generating a calibration sequence; performing the transmitting calibration; performing the receiving calibration; and computing the transmitting and receiving compensation coefficients.

The calibration sequence is generated by a periodic cycling shift of a basic calibration sequence selected with good anti-white-noise characteristics. The length of the basic calibration sequence P is $W \times N$, where N is the number of operating antenna elements of the antenna array, and W is the window length in the channel estimation of each link. The length of the calibration sequence when performing the transmitting and receiving calibration is $W \times N + W - 1$, that is, P + W - 1.

Since W relates only to the inconsistency of the hardware time-delay of each antenna element (usually very small), the calibration duration is very short when carrying out calibration by using the method of the present invention. In some systems where the calibration duration is limited, N can take a larger value in order to have a larger antenna gain for the system.

The procedure for generating the calibration sequence from the basic calibration sequence is as follows:

(1) Take a binary sequence $\mathbf{m_P}$ with the length of P as the basic calibration sequence, where $\mathbf{m_P} = (m_1, m_2,...,m_P)$. P = W×N (select a power of 2 as P to simplify the computation);

(2) In order to avoid an abrupt phase change and increase the calibration accuracy, make a phase equalization of the basic calibration sequence $\mathbf{m_P}$ to generate a complex vector of the calibration sequence $\underline{\mathbf{m_P}}$; $\underline{\mathbf{m_P}} = (\underline{m}_1, \underline{m}_2,..., \underline{m}_P)$, where the element $\underline{m}_i$ is derived from the corresponding element $m_i$ of the sequence $\mathbf{m_P}$, $\underline{m}_i = (j)^{i-1} \cdot m_i$, (i = 1 ...P), and j is the square root of (-1), in this way the phase equalization is implemented;

(3) In order to generate the calibration sequence for each antenna element, the basic calibration sequence is periodically expanded to obtain a new complex vector $\underline{\mathbf{m}}$, $\underline{\mathbf{m}} = (\underline{m}_1, \underline{m}_2,..., \underline{m}_{i_{max}}) = (\underline{m}_2, \underline{m}_3,..., \underline{m}_p, \underline{m}_1, \underline{m}_2,..., \underline{m}_p)$;

(4) The calibration sequence vector of each antenna element can be obtained from this periodical complex vector, and a fixed level calibration signal is thereby generated: the sequence vector $\underline{\mathbf{m}}^{(k)} = \left( \underline{m}_1^{(k)}, \underline{m}_2^{(k)},..., \underline{m}_{L_m}^{(k)} \right)$, k = 1 ... N, Lm = P+W-1 (Lm is the window length, i.e. the length of the transmitting calibration sequence).

An element of the sequence vector $\underline{m}_i^{(k)} = \underline{m}_{i+(N-k)W}$, $i = 1,...,L_m$ and $k = 1,...,N$ (k represents any antenna element of an operating antenna array).

At the same time, a vector S relating to the basic calibration sequence should be computed for this invention as well, which is stored in the baseband signal processor as a constant vector for computing the compensation coefficients when performing the transmitting and receiving calibrations:

$$S = 1./ fft(\underline{\mathbf{m}}_P) = 1./ fft\left( \underline{m}_1, \underline{m}_2,..., \underline{m}_P \right)$$

where ./ represents a point-division and fft represents the Fast Fourier Transform Algorithm.

The selecting the basic calibration sequence step refers to selecting a binary sequence which makes S have a minimum norm and has a length P.

The transmitting calibration comprises the following steps: each antenna element transmitting a fixed level calibration sequence simultaneously, and the calibration link receiving the combined signal thereof. With the algorithm provided by the present invention, the baseband signal processor processing the signal data received by the calibration link, computing the amplitude and phase response of each transmitting link, and then computing the compensation coefficient (including the amplitude and the phase compensation) for each transmitting link according to the compensation coefficient (transmitting compensation coefficient) thereof obtained during pre-calibration, by which all the downlink data of the base station are compensated at the baseband signal processor.

Taking the base station in Fig. 1 as an example, N transmitting links transmit calibration sequence vectors $\underline{\mathbf{m}}^{(k)}$ with a certain power level at point $B_k$ (k=1, ...N). Through the transceivers 203-1 ... 203-N, the feeder cables 202-1 ... 202-N, the antenna elements 201-1 ... 201-N and the antenna array couple structure 205, the fixed level signals are received by the calibration link antenna element 201. The baseband signal processor computes the received data from the calibration link (201, 206 and 207) to obtain the amplitude and phase response of each transmitting link $B_k \to A_k$. In fact, the amplitude and phase response of the link $B_k \to A_k \to A_C \to B_C$ is needed. Since the amplitude and phase response of the path $A_k \to A_C$ has been obtained in the pre-calibration, only the amplitude and phase response of the path $B_k \to A_k$ needs to be computed.

Suppose R is the complex vector received from the baseband signal processor after each transmitting calibration sequence signal of the antenna elements 201-1 ... 201-N is accumulated in the calibration link antenna unit 201, the receiving sequence:

$$R = \left( r_1, r_2,..., r_l \right) \quad l = p+2\times(w-1),$$

from which a section can be intercepted with a length equaling to that of the basic sequence P, that is, $\underline{R}_p = (\underline{r}_1, \underline{r}_2,..., \underline{r}_p)$. Suppose the interception is made in the middle of the sequence (there could be various ways of interception) as represented in the following formula, $\underline{R}_p = (r_{w-1}, r_w,..., r_{w+p-2})$.

A Channel Impulse Response (CIR) sequence with a length of P can be obtained by operation of the following formula: $CIR = (c_1, c_2,..., c_p) = ifft(fft(\underline{R}_P.S))$, where represents a point multiplication, fft represents the Fast Fourier Transform Algorithm, ifft represents the Inverse Fast Fourier Transform Algorithm, S is the constant vector obtained as de-

scribed above.

$$\text{Compute } CIR_k = f\max\!\left(c_{w\times(k-1)+1},...,c_{w\times k}\right), \text{k} = 1, ... \text{N},$$

$f$ max is an interpolation function to evaluate the peak between the channel estimation results $c_{w\times(k-1)+1}\sim c_{w\times k}$ of the kth transmitting link (the specific value depends on the required computation accuracy), $CIR_k$ is a complex number comprising the amplitude and phase response of the path $B_k \rightarrow A_c$ of the kth link.

Multiply the $CIR_k$ with the transmitting compensation coefficient $c_k^{TX}$ of the path $A_k \rightarrow A_C$ of the kth link obtained in the pre-calibration, then obtain:

$$CIR_k^{'} = CIR_k \times c_k^{TX}, \text{k} = 1 ... \text{N},$$

where, $CIR_k^{'}$ is also a complex number, which contains the amplitude and phase response of the path $B_k \rightarrow A_k$ of the kth link. By using the amplitude and phase response above, the transmitting compensation coefficient of the kth link can be obtained.

The receiving calibration comprises the following steps: the calibration link transmitting a fixed level calibration sequence signal, which is received by each receiving link simultaneously. The baseband signal processor computing the amplitude and phase response of each receiving link on the basis of the received data at each receiving link, by which and the receiving compensation coefficient obtained in the pre-calibration the compensation coefficient (including the amplitude and phase compensation) of each receiving link is computed and obtained. With the compensation coefficients, all downlink data of the base station can be compensated in the baseband signal processor.

Also taking the base station in Fig. 1 as an example, the calibration link (201, 206 and 207) transmits a calibration vector signal with a certain power level $\underline{m}^{(k)}$ (k = 1, ... N) at point $B_c$. The signal is received by each receiving link through the couple structure 205, each antenna element of the antenna array 201-1 ... 201-N each feeder cable 202-1, ...202-N, each transceiver 203-1, ...203-N. The baseband signal processor 204 computes the data received from each receiving link to obtain the amplitude and phase response of each receiving link ($A_k \rightarrow B_k$). In fact, the amplitude and phase response of the path $B_c \rightarrow A_c \rightarrow A_k \rightarrow B_k$ is needed, since the amplitude and phase response of the path $A_c \rightarrow A_k$ have been obtained in pre-calibration, only the amplitude and phase response of the path $A_k \rightarrow B_k$ needs to be computed.

Suppose $R^k$ is the complex vector of each link received in the baseband signal processor 204, the receiving sequence:

$$R^k = \left(r_1^{k}, r_2^{k}, ..., r_l^{k}\right), \text{l} = \text{p+2}\times(\text{w-1}), \text{k} = 1, ..\text{N}.$$

Intercept a section from the receiving sequence with a length that equals to the length of the basic calibration sequence P, $\underline{R}_P^k = (\underline{r}_1^{k}, \underline{r}_2^{k}, ..., \underline{r}_P^{k})$. Suppose the interception is made in the middle of the sequence (there could be various ways of interception) as represented in the following formula, $\underline{R}^k{}_P = \left(r_{w-1}^{k}, r_w^{k}, ..., r_{w+p-2}^{k}\right)$ k = 1, ..., N.

A Channel Impulse Response (CIR) sequence with the length of P can be obtained by operation of the following formula: $CIR^k = \left(c_1^{k}, c_2^{k}, ..., c_p^{k}\right) = ifft(fft(\underline{R}_P^k.S))$, k = 1, ...N, where represents a point multiplication, fft represents the Fast Fourier Transform Algorithm, ifft represents the Inverse Fast Fourier Transform Algorithm, and S is the constant vector obtained as described above.

Compute $CIR_k = f\max\!\left(c_1^{k}, c_2^{k}..., c_p^{k}\right)$, k = 1, ... N, $f$ max is an interpolation function to evaluate the peak between the channel estimation results $c_1^{k} \sim c_{w\times k}^{k}$ of the kth receiving link (the specific value depends on the required computation accuracy), $CIR_k$ is a complex number containing the amplitude and phase response of the path $B_k \rightarrow A_c$

of the $k^{th}$ link.

Multiply the $CIR_k$ with the receiving compensation coefficient $C_k^{RX}$ of the path $Ac \rightarrow A_k$ of the $k^{th}$ link obtained in the pre-calibration, and obtain:

$$CIR'_k = CIR_k \times c_k^{RX}, \text{ k = 1, ... N,}$$

where $CIR'_k$ is also a complex number, containing the amplitude and phase response of the path $A_k \rightarrow B_k$ of the $k^{th}$ link, by means of which the receiving compensation coefficient of the $k^{th}$ link can be obtained.

The formulas adopted in this invention for computing the compensation coefficient are as follows:

First, compute the mean power of each link, which is carried out for the transmitting link and receiving link respectively, that is, $CIR_k'$ in the following formula is the result of the transmitting calibration and the receiving calibration, respectively.

$$\text{Mean\_power} = (\sum_{k=1}^{N} (\text{abs}(CIR'_k))^2)/N, \text{ (abs is an amplitude function).}$$

In this way, the transmitting compensation coefficient and the receiving compensation coefficient can be computed respectively by the following formula. While computing the compensation power of the receiving link, use the mean power of the receiving link and the $CIR_k'$ obtained in the receiving calibration, and while computing the compensation power of transmitting link, use the mean power of the transmitting link and the $CIR_k'$ obtained in the transmitting calibration:

$$\text{Corr\_factor}^k = \text{sqrt(Mean\_power)}/ CIR'_k, \text{ k = 1, ...N.}$$

Although the descriptions above are given with reference to the structure of a TDD CDMA base station, the calibration method is independent of the transmitting calibration and the receiving calibration, so the method of the present invention can also be implemented in an FDD CDMA base station which uses different smart antenna arrays to transmit and receive signals.

In the present invention, data transmitted and received are compensated respectively by the baseband signal processor using the transmitting compensation coefficient and the receiving compensation coefficient computed. Thus a software implementation of real-time calibration of a smart antenna array is achieved.

In practice, it is not likely for a mobile communication system to run in full load all the time. There would always be some idle gaps which can be used for real-time calibration. For TD-SCDMA system, a third generation mobile communication system, the Gad Period (GP) between the Uplink Pilot Time-Slot (UpPTS) and the Downlink Pilot Time-Slot (DwPTS) in a frame can be used for the real-time calibration.

The calibration by this method can be periodically performed while the base station is in operation.

Any person skilled in the art of smart antenna calibration with an understanding of the basic principles thereof can easily implement the real-time calibration of a smart antenna array by referring to the method of this invention.

**Claims**

**1.** A method for calibrating smart antenna array systems in real time, comprising: pre-calibrating each antenna element of a smart antenna array (201-1 to 201-N) to obtain the transmitting compensation coefficient $c_k^{TX}$ and the receiving compensation coefficient $C_k^{RX}$ of each antenna element (201-1 to 201-N) relative to a calibration antenna element (201), **characterized in that**:

in a transmitting calibration procedure, a plurality of transmitting links transmit each calibration signal simultaneously, and a calibration link receives a combined signal thereof, a baseband signal processor (204) processes the combined signal received by the calibration link to obtain the amplitude and phase response of each transmitting link and computes the compensation coefficient of each transmitting link on the basis of the amplitude and phase response of each transmitting link and the transmitting compensation coefficients $c_k^{TX}$ obtained in the pre-calibration for compensating all the downlink data of the base station;

in a receiving calibration procedure, the calibration link transmits a calibration signal, and the receiving links receive the calibration signal simultaneously, then the baseband signal processor (204) processes the calibration signals received by the receiving links to obtain the amplitude and phase response of each receiving link then computes the compensation coefficient of each receiving link on the basis of the amplitude and phase response of each receiving link and the receiving compensation coefficients $C_k^{RX}$ obtained in the pre-calibration for compensating all the uplink data of the base station;

the calibration signal for each antenna element is generated by a periodic cycling shift of a basic calibration sequence and the calibration signal is a calibration sequence with good anti-white-noise characteristics.

2. A method according to claim 1, wherein generating a calibration signal by a periodic cycling shift of a basic calibration sequence comprises:

taking a binary sequence $m_p$ with the length P as the basic calibration sequence, $\mathbf{m_P} = (m_1, m_2, ..., m_P)$, where P = w×N, N is the number of the antenna elements of the smart antenna array, and w is the window length of channel estimation of each transmitting or receiving link;

performing a phase equalization to the sequence $m_p$, generating a complex vector of the calibration sequence $\underline{m}_p$, $\underline{\mathbf{m}}_P = (\underline{m}_1, \underline{m}_2, ..., \underline{m}_P)$, where the element of the sequence $\underline{m}_i = (j)^{i-1} \cdot m_i$, i = 1, ...P, and j is the square root of -1;

expanding $\underline{m}_p$ periodically and obtaining a new periodical complex vector $\underline{m}$, $\underline{\mathbf{m}} = (\underline{m}_1, \underline{m}_2, ..., \underline{m}_{i_{max}}) = (\underline{m}_2, \underline{m}_3, ..., \underline{m}_p, \underline{m}_1, \underline{m}_2, ..., \underline{m}_p)$;

obtaining a calibration sequence vector with a length Lm=P+w-1 for each antenna element from the periodical complex vector $\underline{m}$, $\underline{\mathbf{m}}^{(k)} = \left( \underline{m}_1^{(k)}, \underline{m}_2^{(k)}, ..., \underline{m}_{L_m}^{(k)} \right)$, k = 1, ...N, an element of the calibration sequence vector

$$\underline{m}_i^{(k)} = \underline{m}_{i+(N-k)W}, \quad i = 1, ...Lm \text{ and } k = 1, ...N;$$

generating a calibration sequence of signal with a fixed power from the calibration sequence vector on the basis of the calibration requirement.

3. A method according to claim 2, wherein the P is selected as a power of 2.

4. A method according to claim1, wherein the transmitting calibration and receiving calibration are periodically performed in the idle gap of a mobile communication system.

5. A method according to claim 1, wherein, in a TD-SCDMA system, the transmitting calibration and receiving calibration are periodically performed in the guard period between uplink pilot time-slot and downlink pilot time-slot in a frame.

6. A method according to claim 1, wherein computing the compensation coefficient of each transmitting link in the transmitting calibration comprises

obtaining the complex vector of the combined signal received by the calibration link $R = (r_1, r_2, ..., r_l)$, where $l$ = P+2×(w-1), P = w×N represents the length of the basic calibration sequence, N is the number of the antenna elements of the smart antenna array, and w is the window length in the channel estimation of each transmitting link;

intercepting from the vector a section $\underline{R}_p = (\underline{r}_1, \underline{r}_2, \cdots, \underline{r}_p)$ with a length equals to that of the basic calibration sequence P;

computing a Channel Impulse Response sequence with a length P using the formula $CIR = (c_1, c_2, .., c_p) = ifft(fft(\underline{R}_P.S))$, where S is a constant vector; computing a Channel Impulse Response sequence with a length P using the formula $CIR^k = \left( c_1^k, c_2^k, ..., c_p^k \right) = ifft(fft(\underline{R}_p^k.S))$, where k=1..N, S is a constant vector;

computing an interpolation function of the peak value between the channel estimation results $c_{w \times (k-1)+1} \sim c_{w \times k}$ of the $k^{th}$ transmitting link: $CIR_k = f \max(c_{w \times (k-1)+1}, ..., c_{w \times k})$, and obtaining the amplitude and phase response of the $k^{th}$ link including the path between the transmitter (203-k) and the antenna element of the calibration link (201), k =

1, ...N;

multiplying $CIR_k$ with the transmitting compensation coefficient $c_k^{TX}$ of the $k^{th}$ link obtained in the pre-calibration, obtaining the amplitude and phase response of the $k^{th}$ link including the path between the transmitter (203-k) and the antenna element (201-k) thereof: $CIR_k^{'} = CIR_k \times c_k^{TX}$, k = 1 ... N;

computing the mean power of a transmitting link with the following formula:

$$\text{Mean\_power} = (\sum_{k=1}^{N} (abs(CIR_k^{'}))^2)/N ;$$

computing the transmitting compensation coefficient of each transmitting link with the following formula:

$$\text{Corr\_factor}^k = sqrt(\text{Mean\_power})/CIR_k^{'} ,$$ where sqrt ( ) represents a square root function.

**7.** A method according to claim 6, wherein intercepting from the vector a section $\underline{R}_p = (\underline{r}_1, \underline{r}_2, \cdots, \underline{r}_p)$ with a length equals to that of the basic calibration sequence P is performed by intercepting a part of the sequence as expressed by the following formula $\underline{R}_p = (r_{w-1}, r_w, \cdots, r_{w+p-2})$.

**8.** A method according to claim 6, wherein the constant vector S is computed by the formula: $S = 1./ fft(\underline{\mathbf{m}}_P) = 1./ fft(\underline{m}_1, \underline{m}_2, ..., \underline{m}_P)$, where the complex vector of the calibration sequence, $\underline{\mathbf{m}}_P = (\underline{m}_1, \underline{m}_2, ..., \underline{m}_P)$, is generated by a phase equalization to the basic calibration sequence $\mathbf{m}_P = (m_1, m_2, ..., m_P)$, the element of the sequence $\underline{m}_i = (j)^{i-1} \cdot m_i$, i = 1, ...P, P = w×N represents the length of the said basic calibration sequence, N is the number of antenna elements of the smart antenna array, and w is the window length in channel estimation of each transmitting link.

**9.** A method according to claim 1, wherein computing the compensation coefficient of each receiving link in the receiving calibration comprises:

obtaining a complex vector sequence of the signal received by each receiving link $R^k = \left( r_1^k, r_2^k, ..., r_l^k \right)$, where $l$ = P+2×(w-1) , k = 1, ..N, P = w×N represents the length of the basic calibration sequence, N is the number of antenna elements of the smart antenna array, and w is the window length of channel estimation of each receiving link;

intercepting from the sequence a section with a length equals to that of the basic calibration sequence P, $\underline{R}_P^k = (\underline{r}_1^k, \underline{r}_2^k, ..., \underline{r}_P^k)$ k = 1, ...N;

obtaining a Channel Impulse Response sequence with a length P by the formula $CIR^k = \left( c_1^k, c_2^k, ..., c_P^k \right) = ifft(fft(\underline{R}_P^k.S))$ , where k = 1, ...N and S is a constant vector;

computing the interpolation function of the peak value between the channel estimation results $c_1^k \sim c_{w \times k}^k$ of the $k^{th}$ receiving link with $CIR_k = f \max\left( c_1^k, c_2^k ..., c_P^k \right)$, obtaining the amplitude and phase response of the $k^{th}$ receiving link including the path between the antenna element of the calibration link (201) and the RF receiver (203-k), k = 1, ...N;

multiplying $CIR_k$ with the receiving compensation coefficient $C_k^{RX}$ of the $k^{th}$ link obtained in the pre-calibration, obtaining the amplitude and phase response of the $k^{th}$ receiving link including the path between the antenna element (201-k) and the RF receiver (203-k), $CIR_k^{'} = CIR_k \times c_k^{RX}$ k = 1, ...N;

computing the mean power of a receiving link with the formula:

$$\text{Mean\_power} = (\sum_{k=1}^{N} (\text{abs}(\text{CIR}_k^{'}))^2)/N\,;$$

computing a receiving compensation coefficient of each receiving link with the formula:

$$\text{Corr\_factor}^k = \text{sqrt}(\text{Mean\_power})/\,\text{CIR}_k^{'}\,,$$ where k = 1, ... N and sqrt( ) represents a square root function.

**10.** A method according to claim 9, wherein intercepting from the sequence a section with a length equals to that of the basic calibration sequence P is performed by intercepting a part of the sequence as expressed by the formula

$$\underline{R}^k{}_p = \left( r_{w-1}^k, r_w^k, \ldots, r_{w+p-2}^k \right),\ k = 1, \ldots N.$$

**11.** A method according to claim 9, wherein the constant vector S is computed with the formula: $S = 1./fft(\underline{m}_P) = 1./fft(\underline{m}_1,\underline{m}_2,...,\underline{m}_P)$, where the complex vector of the calibration sequence $\underline{m}_P = (\underline{m}_1,\underline{m}_2,...,\underline{m}_P)$ is generated by a phase equalization to the basic calibration sequence $\mathbf{m_P} = (m_1,m_2,...,m_P)$, the element of the sequence $\underline{m}_i = (j)^{i-1} \cdot m_i$, i = 1, ...P, P = w×N represents the length of the basic calibration sequence, N is the number of the antenna elements of the smart antenna array, and w is the window length of channel estimation of each receiving link.

**Patentansprüche**

**1.** Verfahren zum Kalibrieren von intelligenten Antennengruppensystemen in Echtzeit, umfassend: Vorkalibrieren eines jeden Antennenelements einer intelligenten Antennengruppe (201-1 bis 201-N), um den Übertragungskompensationskoeffizienten $c_k^{TX}$ und den Empfangskompensationskoeffizienten $C_k^{RX}$ eines jeden Antennenelements (201-1 bis 201-N) relativ zu einem Kalibrierantennenelement (201) zu erhalten, **dadurch gekennzeichnet, dass:**

in einem Übertragungskalibrierprozess eine Vielzahl von Übertragungsstrecken jedes Kalibriersignal gleichzeitig übertragen und eine Kalibrierstrecke ein kombiniertes Signal davon empfängt, wobei ein Basisband-Signalprozessor (204) das von der Kalibrierstrecke empfangene kombinierte Signal verarbeitet, um den Amplituden- und Phasengang einer jeden Übertragungsstrecke zu erhalten, und den Kompensationskoeffizienten einer jeden Übertragungsstrecke berechnet auf der Basis des Amplituden- und Phasengangs einer jeden Übertragungsstrecke und der Übertragungskompensationskoeffizienten $c_k^{TX}$, die in der Vorkalibrierung zum Kompensieren aller Abwärtsstreckendaten der Basisstation erhalten werden;
in einem Empfangskalibrierprozess die Kalibrierstrecke ein Kalibriersignal überträgt, und die Empfangsstrecken das Kalibriersignal gleichzeitig empfangen, dann der Basisband-Signalprozessor (204) die von den Empfangsstrecken empfangenen Kalibriersingale verarbeitet, um den Amplituden- und Phasengang einer jeden Empfangsstrecke zu erhalten, dann den Kompensationskoeffizienten einer jeden Empfangsstrecke berechnet auf der Basis des Amplituden- und Phasengangs einer jeden Empfangsstrecke und der Empfangskorrpensationskoeffizienten $C_k^{RX}$, die in der Vorkalibrierung zum Kompensieren aller Aufwdrtsstreckendaten der Basisstation erhalten werden;
das Kalibriersignal für jedes Antennenelement durch eine periodische zyklische Verschiebung einer Basiskalibrierfolge erzeugt wird und das Kalibriersignal eine Kalibrierfolge mit guten Anti-Weißrauschen-Charakteristiken ist.

**2.** Verfahren nach Anspruch 1, worin das Erzeugen eines Kalibriersignals durch eine periodische zyklische Verschiebung einer Basiskalibrierfolge Folgendes umfasst:

Setzen einer Binärfolge $m_P$ der Länge P als die Basiskalibrierfolge, $\mathbf{m_P} = (m_1,m_2,...,m_P)$, wo P = w×N, N die Anzahl der Antennenelemente der intelligenten Antennengruppe ist und w die Fensterlänge der Kanalschätzung einer jeden Übertragungs- oder Empfangsstrecke ist;
Ausführen einer Phasenentzerrung an der Folge $m_P$, Erzeugen eines komplexen Vektors der Kalibrierfolge $\underline{m}_P$, $\underline{m}_P = (\underline{m}_1,\underline{m}_2,...,\underline{m}_P)$, wo das Element der Folge $\underline{m}_i = (j)^{i-1} \cdot m_i$ ist mit i = 1,...,P, und j die Quadratwurzel von -1 ist; periodische Entwicklung von $\underline{m}_P$ und Erhalten eines neuen periodischen komplexen Vektors $\underline{m}$, $\underline{m} = (\underline{m}_1, \underline{m}_2,$

$\cdots$, $\underline{m}_{l_{max}}$) = ($\underline{m}_2,\underline{m}_3,...,\underline{m}_P,\underline{m}_1,\underline{m}_2,...,\underline{m}_P$);

Erhalten eines Kalibrierfolgevektors mit einer Länge Lm=P+w-1 für jedes Antennenelement aus dem periodischen komplexen Vektor $\underline{m}$, $\underline{m}^{(k)} = (\underline{m}_1^{(k)},\underline{m}_2^{\overline{(k)}},...,\underline{m}_{L_m}^{(k)})$, k = 1,...,N, wo ein Element des Kalibrierfolgevektors $\underline{m}_i^{(k)} = \underline{m}_{i+(k-k)w}$ ist mit i = 1,...,Lm und k = 1,...,N;

Erzeugen einer Kalibrierfolge des Signals mit einer festen Leistung vom Kalibrierfolgevektor auf der Basis der Kalibrieranforderung.

3. Verfahren nach Anspruch 2, worin P als eine Potenz von 2 gewählt wird.

4. Verfahren nach Anspruch 1, worin die Übertragungsklibrierung und Empfangskalibrierung periodisch in der Untätigkeitslücke eines Mobilkommunikationssystems ausgeführt werden.

5. Verfahren nach Anspruch 1, worin in einem TD-SCDMA-System die Übertragungskalibrierung und Empfangskalibrierung periodisch in der Schutzlücke zwischen Aufwärtsstrecken-Pilotzeitschlitz und Abwärtsstrecken-Pitotzeitschlitz in einem Rahmen ansgeführt werden.

6. Verfahren nach Anspruch 1, worin das Berechnen des Kompensationskoeffizienten einer jeden Übertragungsstrecke in der Übertragungskalibrierung Folgendes umfasst:

Erhalten des komplexen Vektors des kombinierten Signals, das von der Kalibrierstrecke empfangen wird: $R$ = ($r_1,r_2,....,r_l$), wo $l$ = P+2×(w-1), P = w×N die Länge der Basiskalibrierfolge darstellt, N die Anzahl der Antennenelemente der intelligenten Antennengruppe ist und w die Fensterlänge in der Kanalschätzung einer jeden Übertragungsstrecke ist;

Eliminieren aus dem Vektor von einem Abschnitt $\underline{R}_P$ = ($\underline{r}_1,\underline{r}_2,...,r_P$) mit einer Länge gleich der Länge P der Basiskalibrierfolge;

Berechnen einer Kanalimpulsgaugfolge mit einer Länge P unter Verwendung der Formel

$$CIR = \left(c_1, c_2,...,c_P\right) = ifft(fft(\underline{R}_P,S))$$,

wo S ein konstanter Vektor ist; Berechnen einer Kanalimpulsgangfolge mit einer Länge P unter Verwendung der Formel

$$CIR^k = \left(c_1^k, c_2^k,...,c_P^k\right) = ifft(fft(\underline{R}_r^k,S))$$,

wo k = 1,...,N, und S ein konstanter Vektor ist;

Berechnen einer Interpolationsfunktion des Spitzenwerts zwischen den Kanaischätzungsergebnissen $c_{wx(k-1)+1} \sim c_{wxk}$ der k-ten Übertragungsstrecke:

$$CIR_k = f\max\left(c_{wx(k-1)+1},...,c_{wxk}\right),$$

und Erhalten des Amplituden- und Phasengangs der k-ten Strecke einschließlich des Pfads zwischen dem Sender (203-k) und dem Antennenelement der Kalibrierstrecke (201), k = 1.....N;

Multiplizieren von $CIR_k$ mit dem Übertragungskompensationskoeffizienten $c_k^{TX}$ der in der Vorkalibrienung erhaltenen k-ten Strecke, Erhalten des Amplituden- und Phasengangs der k-ten Strecke einschließlich des Pfads zwischen dem Sender (203-k) und dem Antennenelement (201-k) davon: $CIR_k' = CIR_k \times c_k^{TX}$, k = 1,...,N;

Berechnen der mittleren Leistung einer Übertragungsstrecke mit der folgenden Formel:

$$Mean\_power = (\sum_{k=1}^{N}(abs(CIR_k'))^2)/N;$$

Berechnen des Übertragungskompensationskoeffizienten einer jeden Übertragungsstrecke mit der folgenden For-

mel:

$$\text{Corr\_factor}^k = \text{sqrt(Mean\_power)}/\text{CIR}_k',$$

wo sqrt() eine Quadratwurzelfunktion darstellt.

**7.** Verfahren nach Anspruch 6, worin das Eliminieren aus dem Vektor von einem Abschnitt $\underline{R_P} = (\underline{r}_1,\underline{r}_2,..., \underline{r}_p)$ mit einer Länge gleich der Länge P der Basiskalibrierfolge durch Eliminieren eines Teils der Folge ausgeführt wird, wie durch die folgende Formel ausgedrückt ist: $\underline{R_p} = (r_{w-1}, r_w, ..., r_{w+p-2})$.

**8.** Verfahren nach Anspruch 6, worin der konstante Vektor S durch die Formel

$$S = 1./\mathit{fft}(\underline{\mathbf{m}}_P) = 1./\mathit{fft}(\underline{m}_1,\underline{m}_2,...,\underline{m}_P),$$

berechnet wird, wo der komplexe Vektor der Kalibrierfolge $\underline{\mathbf{m}}_P = (\underline{m}_1,\underline{m}_2,...,\underline{m}_p)$ durch eine Phasenentzerrung an der Basiskalibrierfolge $\mathbf{m}_P$ ($m_1,m_2,...,m_p$) erzeugt wird, wo das Element der Folge $\underline{m}_i = (j)^{i-1} \cdot m_i$ ist mit i = 1,...,P, P $\simeq$ w×N die Länge der Basiskalibrierfolge darstellt, N die Anzahl der Antennenelemente der intelligenten Antennengruppe ist und w die Fensterlänge in der Kanalschätzung einer jeden Übertragungsstrecke ist.

**9.** Verfahren nach Anspruch 1, worin das Berechnen des Kompensationskoeffizienten einer jeden Empfangsstrecke in der Empfangskalibrierung umfasst:

Erhalten einer komplexen Vektorfolge des von jeder Empfangsstrecke empfangenen Signals: $R^k = (r_1^k, r_2^k,...,r_l^k)$, wo $l$ = P+2×(w-1), k = 1,...,N, P = w×N die Länge der Basiskalibrierfolge darstellt, N die Anzahl von Antennenelementen der intelligenten Antennengruppe ist und w die Fensterlänge der Kanalschätzung einer jeden Empfangsstrecke ist;

Eliminieren aus der Folge von einem Abschnitt mit einer Länge gleich der Länge P der Basiskalibrierfolge $\underline{R}_P^k = (\underline{r}_1^k,\underline{r}_2^k,...,\underline{r}_P^k)$, k=1,...,N;
Erhalten einer Kanalimpulsgangfolge mit einer Länge P durch die Formel

$$CIR^k = (c_1^k, c_2^k,..., c_P^k) = \mathit{ifft}(\mathit{fft}(\underline{R}_P^k.S)),$$

wo k=1,...,N, und S ein konstanter Vektor ist;
Berechnen der Interpolationsfunktion des Spitzenwerts zwischen den Kanalsehätzungsergebnissen $c_i^k \sim c_{w\ast k}^k$ der k-ten Empfangsstrecke mit $CIR_k = f \max(c_1^k, c_2^k,...,c_P^k)$ und Erhalten des Amplituden- und Phasengangs der k-ten Empfangssttecke einschließlich des Pfads zwischen dem Antennenelement der Kalibrierstrecke (201) und dem RF-Empfänger (203-k), k = 1,...,N;
Multiplizieren von $CIR_k$ mit dem Empfangskompensationskoeffizienten $C_k^{RX}$ der in der Vorkalibrierung erhaltenen k-ten Strecke, Erhalten des Amplituden- und Phasengangs der k-ten Empfangsstrecke einschließlich des Pfads zwischen dem Autennenelement (201-k) und dem RF-Emptänger (203-k), $CIR_k' = CIR_k \times C_k^{RX}$, k = 1...N;
Berechnen der mittleren Leistung einer Enapfangsstrecke mit der Formel:

$$\text{Mean\_power} = (\sum_{k=1}^{N} (\text{abs}(\text{CIR}_k'))^2)/N;$$

Berechnen eines Empfangskompeensationskoeffizienten einer jeden Empfangsstrecke mit der Formel:

$$\text{Corr\_factor}^k = \text{sqrt(Mean\_power)}/\text{CIR}_k',$$

wo k = 1,...,N, und sqrt() eine Quadratwunetrunktion darstellt.

**10.** Verfahren nach Anspruch 9, worin das Eliminieren aus der Folge von einem Abschnitt mit einer Länge gleich der Länge P der Basiskalibrierfolge durch Eliminieren eines Teils der Folge ausgeführt wird, wie durch folgende Formel dargestellt ist

$$\underline{R}^k{}_P = \left( r^k_{w-1}, r^k_w, ..., r^k_{w+p-2} \right), \mathrm{k} = 1, ... \mathrm{N}.$$

**11.** Verfahren nach Anspruch 9, worin der konstante Vektor S mit der Formel

$$S = 1./\mathit{fft}(\underline{\mathbf{m}}_P) = 1./\mathit{fft}(\underline{m}_1, \underline{m}_2, ..., \underline{m}_P),$$

berechnet wird, wo der komplexe Vektor der Kalibrierfolge $\underline{\mathbf{m}}_P = (\underline{m}_1, \underline{m}_2, ..., \underline{m}_P)$ durch eine Pbasenentzerrung an der Basiskalibnerfolge $\mathbf{m}_P = (m_1, m_2, ..., m_P)$ erzeugt wird, wo das Element der Folge $\underline{m}_i = (j)^{i-1}. m_i$ ist mit i = 1,...,P, P = w×N die Länge der Basiskalibrierfolge darstellt, N die Anzahl der Antennenelement der intelligenten Antennengruppe ist und w die Fensterlänge der Kanalschätzung einer jeden Empfangsstrecke ist.

**Revendications**

**1.** Procédé pour étalonner des systèmes de réseau d'antennes intelligents en temps réel, consistant à: pré-étalouner chaque élément d'antenne d'un réseau d'antennes intelligent (201-1 à 201-N) pour obtenir le coefficient de compensation d'émission $c_k^{TX}$ et le coefficient de compensation de réception $c_k^{RX}$ de chaque élément d'antenne (201-1 à 201-N) par rapport à un élément d'antenne d'étalonnage (201), **caractérisé en ce que:**

dans une procédure d'étalonnage d'émission, une pluralité de liaisons d'émission émettent chaque signal d'étalonnage simultanément, et une liaison d'étalonnage reçoit un signal combiné de celles-ci, un processeur de signal de bande de base (204) traite le signal combiné reçu par la liaison d'étalonnage pour obtenir la réponse en amplitude et en phase de chaque liaison d'émission et calcule le coefficient de compensation de chaque liaison d'émission sur la base de la réponse en amplitude et en phase de chaque liaison d'émission et des coefficients de compensation d'émission $c_k^{TX}$ obtenus dans le pré-étalonnage pour compenser toutes les données de liaison descendante de la station de base;

dans une procédure d'étalonnage de réception, la liaison d'étalonnage émet un signal d'étalonnage, et les liaisons de réception reçoivent le signal d'étalonnage simultanément, ensuite le processeur de signal de bande de base (204) traite les signaux d'étalonnage reçus par les liaisons de réception pour obtenir la réponse en amplitude et en phase de chaque liaison de réception, calcule ensuite le coefficient de compensation de chaque liaison de réception sur la base de la réponse en amplitude et en phase de chaque liaison de réception et des coefficients de compensation de réception $c_k^{RX}$ obtenus dans le pré-étalonnage pour compenser toutes les données de liaison montante de la station de base;

le signal d'étalonnage pour chaque élément d'antenne est généré par un décalage de cycle périodique d'une séquence d'étalonnage de base et le signal d'étalonnage est une séquence d'étalonnage avec de bonnes caractéristiques anti-bruit blanc.

**2.** Procédé selon la revendication 1, dans lequel la génération d'un signal d'étalonnage par décalage de cycle périodique d'une séquence d'étalonnage de base consiste à:

prendre une séquence binaire $m_P$ avec la longueur P en tant que séquence d'étalonnage de base, $m_P = (m_1, m_2, .... m_p)$, où P = w×N, N est le nombre d'éléments d'antenne du réseau d'antennes intelligent, et w est la longueur de fenêtre d'estimation de canal de chaque liaison d'émission ou de réception;

effectuer une égalisation de phase à la séquence $m_P$, générant un vecteur complexe de la séquence d'étalonnage $\underline{m}_p$, $\underline{m}_p = (\underline{m}_1, \underline{m}_2, \underline{m}_p)$, où l'élément de la séquence $\underline{m}_i = (j)^{i-1}.m_i$, i = 1, ... P, et j est la racine carrée de -1;

développer $\underline{m}_p$ périodiquement et obtenir un nouveau vecteur complexe périodique $\underline{m}$, $\underline{m} (\underline{m}_1, \underline{m}_2, ..., \underline{m}_{imax}) = (\underline{m}_2, \underline{m}_3, ..., \underline{m}_P, m_1, m_2, ..., \underline{m}_p)$;

obtenir un vecteur de séquence d'étalonnage d'une longueur Lm = P+w-1 pour chaque élément d'antenne à partir du vecteur complexe périodique $\underline{m}$, $\underline{m}^{(k)} = (\underline{m}_1^{(k)}, \underline{m}_2^{(k)}, ..., \underline{m}_{Lm}^{(k)})$, k = 1, ... N, un élément du vecteur de séquence d'étalonnage $\underline{m}_i^{(k)} = \underline{m}_{i+(N-k)w}$, i = 1, ... Lm et k = 1, ... N;

générer une séquence d'étalonnage du signal avec une puissance fixe à partir du vecteur de séquence d'étalonnage sur la base de la spécification d'étalonnage.

3. Procédé selon la revendication 2, dans lequel P est sélectionné en tant que puissance de 2.

4. Procédé selon la revendication 1, dans lequel l'étalonnage d'émission et l'étalonnage de réception sont effectués périodiquement dans l'espace inoccupé d'un système de communication mobile.

5. Procédé selon la revendication 1, dans lequel, dans un système TD-SCDMA, l'étalonnage d'émission et l'étalonnage de réception sont effectués périodiquement dans la période de garde entre une tranche de temps de pilote de liaison montante et une tranche de temps de pilote de liaison descendante dans une trame.

6. Procédé selon la revendication 1, dans lequel le calcul du coefficient de compensation de chaque liaison d'émission dans l'étalonnage d'émission consiste à:

obtenir le vecteur complexe du signal combiné reçu par la liaison d'étalonnage $R = (r_1 \ r_2, ..., r_l)$, où $l = P+2\times(w-1)$, $P = w\times N$ représente la longueur de la séquence d'étalonnage de base, N est le nombre d'éléments d'antenne du réseau d'antennes intelligent, et w est la longueur de fenêtre dans l'estimation de canal de chaque liaison d'émission;

intercepter à partir du vecteur une section $\underline{R}_p = (\underline{r}_1, \underline{r}_2, ..., \underline{r}_p)$ avec une longueur égale à celle de la séquence d'étalonnage de base P;

calculer une séquence de réponse impulsionnelle de canal avec une longueur P en utilisant la formule $CIR\ (c_1, c_2,...,c_p) = ifft(fft(\underline{R}_p.S))$, où S est un vecteur constant; calculer une séquence de réponse impulsionnelle de canal avec une longueur P en utilisant la formule $CIR^k = (c_1^k, c_2^k,...,c_p^k) = ifft(fft(\hat{R}_*^k.S))$, où k = 1, ... N, S est un vecteur constant;

calculer une fonction d'interpolation de la valeur crête entre les résultats d'estimation de canal $c_{wx(k-1)+1} \sim c_{wxk}$ de la k-ième liaison d'émission: $CIR_k = f\max(c_{wx(k-1)+1},...,c_{wxk})$, et obtenir la réponse en amplitude et en phase de la k-ième liaison comprenant le trajet entre l'émetteur (203-k) et l'élément d'antenne de la liaison d'étalonnage (201), k = 1, ... N;

multiplier $CIR_k$ par le coefficient de compensation d'émission $c_k^{TX}$ de la k-ième liaison obtenu dans le pré-étalonnage, obtenir la réponse en amplitude et en phase de la k-ième liaison comprenant le trajet entre l'émetteur (203-k) et l'élément d'antenne (201-k) de celui-ci: $CIR_k' = CIR_k \times c_k^{TX}$, k = 1 ... N;

calculer la puissance moyenne d'une liaison d'émission avec la formule suivante:

$$\text{Mean\_power} = (\sum_{k=1}^{N} (\text{abs}(CIR_k'))^2)/N$$

calculer le coefficient de compensation d'émission de chaque liaison d'émission avec la formule suivante: Corr_$factor^k = sqrt(\text{Mean\_poweT})/CIR_k$, où sqrt() représente une fonction racine carrée.

7. Procédé selon la revendication 6, dans lequel l'interception à partir du vecteur d'une section $\underline{R}_p = (\underline{r}_1, \underline{r}_2, ..., \underline{r}_p)$ avec une longueur égale à celle de la séquence d'étalonnage de base P est effectuée en interceptant une partie de la séquence telle qu'exprimée par la formule suivante: $\underline{R}_P = (r_1, r_2, \cdots, r_p)$.

8. Procédé selon la revendication 6, dans lequel le vecteur constant S est calculé par la formule: $S = 1./fft(\underline{m}_c) = 1./fft(m_1, m_2,...,m_P)$, où le vecteur complexe de la séquence d'étalonnage, $\underline{m}_p = (\underline{m}_1, \underline{m}_2, ..., \underline{m}_p)$, est généré par une égalisation de phase à la séquence d'étalonnage de base $m_p = (m_1, m_2, .... m_p)$, l'élément de la séquence $\underline{m}_i = (j)^{i-1}.m_i$, i = 1, ... P, P = wxN représente la longueur de la ladite séquence d'étalonnage de base, N est le nombre d'éléments d'antenne du réseau d'antennes intelligent, et w est la longueur de fenêtre d'une estimation de canal de chaque liaison d'émission.

9. Procédé selon la revendication 1, dans lequel le calcul du coefficient de compensation de chaque liaison de réception dans l'étalonnage de réception consiste à:

obtenir une séquence de vecteurs complexe du signal reçu par chaque liaison de réception $R^k = (r_1^k, r_2^k, ..., r_1^k)$ où 1 = P+2x(w-1), k = 1, ... N, P = wxN représente la longueur de la séquence d'étalonnage de base, N est le nombre d'éléments d'antenne du réseau d'antennes intelligent, et w est la longueur de fenêtre d'estimation de canal de chaque liaison de réception;

intercepter à partir de la séquence une section avec une longueur égale à celle de la séquence d'étalonnage de base P, $R_p^k = (\underline{r}_1^k, \underline{r}_2^k, ..., \underline{r}_p^k)$, k = 1, ... N.

obtenir une séquence de réponse impulsionnelle de canal avec une longueur P par la formule $CIR^k = (c_1^k, c_2^k, ..., c_p^k) = ifft(fft(\underline{R}_p^k, S))$, où k = 1, ... N et S est un vecteur constant;

calculer la fonction d'interpolation de la valeur crête entre les résultats d'estimation de canal $c_1^k \sim c_{wxk}^k$ de la k-ième liaison de réception avec $CIR_k = f \max(c_1^k, c_2^k, ..., c_p^k)$, obtenir la réponse en amplitude et en phase de la k-ième liaison de réception comprenant le trajet entre l'élément d'antenne de la liaison d'étalonnage (201) et le récepteur RF (203-k), k = 1, ..., N;

multiplier $CIR_k$ par le coefficient de compensation de réception $c_k^{RX}$ de la k-ième liaison obtenu dans le pré-étalonnage, obtenir la réponse en amplitude et en phase de la k-ième liaison de réception comprenant le trajet entre l'élément d'antenne (201-k) et le récepteur RF (203-k), $CIR_k' = CIR_k \times c_k^{RX}$

calculer la puissance doyenne d'une liaison de réception avec la formule:

$$Mean\_power = (\sum_{k=1}^{N} (abs(CIR_k'))^2)/N;$$

calculer un coefficient de compensation de réception de chaque liaison de réception avec la formule: $Corr\_factor^k = sqrt(Mean\_power)/CIR_k'$, où k = 1, ... N et sqrt() représente une fonction racine carrée.

10. Procédé selon la revendication 9, dans lequel l'interception à partir de la séquence d'une section avec une longueur égale à celle de la séquence d'étalonnage de base P est effectuée en interceptant une partie de la séquence telle qu'exprimée par la formule $\underline{R}_p^k = (r_{w-1}^k, r_w^k, ..., r_{w+p-z}^k)$, k = 1, ... N.

11. Procédé selon la revendication 9, dans lequel le vecteur constant S est calculé avec la formule: $S = 1./ fft(\underline{m}_P) = 1./ fft(\underline{m}_1, \underline{m}_2, ..., \underline{m}_P)$, où le vecteur complexe de la séquence d'étalonnage $\underline{m}_p = (\underline{m}_1, \underline{m}_2, ..., \underline{m}_p)$ est généré par une égalisation de phase à la séquence d'étalonnage de base $\underline{m}_p = (m_1, m_2, ..., m_p)$, l'élément de la séquence $\underline{m}_i$ $(j)^{i-1}$. $\underline{m}_i$, i = 1, ... P, P = wxN représente la longueur de la séquence d'étalonnage de base, N est le nombre d'éléments d'antenne du réseau d'antennes intelligent, et w est la longueur de fenêtre d'estimation de canal de chaque liaison de réception.

Fig. 1

201     201-1     201-2     201-N

Ac     A1     A2   . . .   AN

Smart Antenna Aray

208

21 Radio Frequency Vector
Network Analyzer

Fig.   2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 97104039
- CN 99111350
- EP 1204161 A
- EP 0805510 A